## Europäisches Patentamt

## European Patent Office

## Office européen des brevets

(19)

(11) Veröffentlichungsnummer: **0 208 098**
**B1**

(12) **EUROPÄISCHE PATENTSCHRIFT**

(45) Veröffentlichungstag der Patentschrift:
**18.01.89**

(21) Anmeldenummer: **86106894.8**

(22) Anmeldetag: **21.05.86**

(51) Int. Cl.⁴: **F16D 65/16**, F16D 65/56,
B60T 17/10

(54) **Zuspannzylinder für Reibungsbremsen.**

(30) Priorität: **12.07.85 DE 3525007**

(43) Veröffentlichungstag der Anmeldung:
**14.01.87 Patentblatt 87/3**

(45) Bekanntmachung des Hinweises auf die Patenterteilung:
**18.01.89 Patentblatt 89/3**

(84) Benannte Vertragsstaaten:
**DE FR GB IT NL SE**

(56) Entgegenhaltungen:
**DE-A- 1 780 045**
**DE-A- 2 141 933**
**DE-A- 2 331 272**
**DE-B- 1 166 563**
**DE-C- 2 239 602**
**FR-A- 2 104 392**
**FR-A- 2 129 920**
**US-A- 4 303 146**
**US-A- 4 412 603**

(73) Patentinhaber: **Karlsson, Sven Inge Krister,
Strandvägen 190, S-234 00 Lomma(SE)**

(72) Erfinder: **Karlsson, Sven Inge Krister, Strandvägen 190,
S-234 00 Lomma(SE)**

(74) Vertreter: **Wilcken, Hugo, Dr. et al, Patentanwälte Dr.
Hugo Wilcken Dipl.-Ing. Thomas Wilcken Musterbahn 1,
D-2400 Lübeck(DE)**

ACTORUM AG

## Beschreibung

Die Erfindung betrifft einen Zuspannzylinder zum Abgeben einer Zuspannkraft für Reibungsbremsen, insbesondere Scheibenbremsen von Fahrzeugen, mit einem von einem fluidischen Bremsdruckmittel beaufschlagbaren, ersten Kolben großen Durchmessers, mit einer Kraftübersetzungseinrichtung, umfassend einen mit dem ersten Kolben verbundenen zweiten Kolben mit bezogen auf ersteren kleinem Durchmesser, der auf ein verformbares, im wesentlichen unkompressibles Übersetzungsmedium eine Druckkraft auszuüben vermag, wobei das Übersetzungsmedium zumindest nahezu hohlraumfrei von einem Reaktionsgehäuse und einem in diesem gleichachsig zum ersten Kolben verschieblich geführten, die Zuspannkraft abgebenden, dritten Kolben mit bezogen auf den zweiten Kolben großem Durchmesser umschlossen ist, mit einer gleichachsig zu den Kolben angeordneten Lüftspielnachstellvorrichtung und mit einer Schnellanlegevorrichtung, welche zu Bremsbeginn einen Druckaufbau im Übersetzungsmedium bis zum Bremsenanlegen verhindert.

Derartige Zuspannzylinder sind aus der DE-OS 2 331 272 bekannt. Das topfartig ausgebildete Reaktionsgehäuse kann dabei mit seinem Bodenabschnitt dem ersten Kolben zugewandt axial verschieblich im Gehäuse des Zuspannzylinders gelagert sein, wobei eine Druckfeder zwischen den ersten Kolben und das Reaktionsgehäuse eingespannt ist und der stößelartige, zweite Kolben abgedichtet axialverschieblich den Bodenabschnitt durchdringt. Aus anderen Ausführungsformen ist es auch bekannt, das Reaktionsgehäuse zylinderfest anzuordnen. Als Schnellanlegevorrichtung sind bei allen Ausführungsformen von kleinen Schaltzylindern schaltbare, mechanische Sperren vorgesehen, welche das Reaktionsgehäuse gegen den dritten Kolben und in Rückhubrichtung gegen das Gehäuse des Zuspannzylinders verriegeln können. Diese Sperren sind aufwendige, verschleißanfällige Bauteile. Zwischen einem Kolbenstangenrohr und einer Kolbenstange kann bei den bekannten Zuspannzylindern eine im Aufbau nicht gezeigte, übliche Lüftspielnachstellvorrichtung eingeordnet sein, sie stellt also eine gesonderte, zusätzliche und damit den Bauaufwand für den Zusapnnzylinder entsprechend steigernde Vorrichtung dar. Aus der DE-OS ist es auch bekannt, zwischen das Reaktionsgehäuse und den dritten Kolben eine letzteren entgegen der Zuspannkraftrichtung belastende Feder einzuspannen.

Für Lüftspielnachstellvorrichtungen sind vielfach nichtselbsthemmende Schraubgetriebe mit einem undrehbaren und einem drehbaren Schraubteil bekannt, wobei letzteres über eine in Schließrichtung federbelastete Dreh- und Axialkupplung mit weiteren Bauteilen kuppelbar ist (z.B. DE-C 2 239 602).

Aus der älteren, nicht vorveröffentlichten DE-A 3 502 516 ist ein Zuspannzylinder der eingangs genannten Art entnehmbar, bei welchem das Reaktionsgehäuse mit einem vierten Kolben verbunden ist, der gleichgerichtet zum ersten Kolben von einem Bremsdruckmittel beaufschlagbar ist. Zwischen den vierten Kolben und dem Gehäuse des Zuspannzylinders ist als Lüftspielnachstellvorrichtung ein Rückhubbegrenzer eingeordnet, dessen konstruktiver Aufbau jedoch nicht näher erläutert ist. Bei der Anordnung kann nach dem Bremsenanlagen das Reaktionsgehäuse einen Rückhub erfahren, welcher dem Lüftspiel entspricht und der Kraftübersetzungseinrichtung unerwünscht große Hübe aufzwingt.

Für Kraftübersetzungseinrichtungen der erwähnten Art ist es bekannt, als Übersetzungsmedium Elastomere, also gummi- oder viskoelastische Stoffe, aber auch hochviskose Medien oder hydraulische Flüssigkeiten zu verwenden.

Es ist Aufgabe der Erfindung, einen Zuspannzylinder der eingangs genannten Art derart auszubilden, daß er bei nur geringem Bauaufwand und sicherer Funktionsweise keine unnötig großen Hübe in der Kraftübersetzungseinrichtung erfordert und die Mängel der bekannten, derartigen Zuspannzylinder vermeidet.

Diese Aufgabe wird nach der Erfindung dadurch gelöst, daß zur baulichen Kombination der Lüftspielnachstellvorrichtung mit der Schnellanlegevorrichtung ein nichtselbsthemmendes, zu den Kolben gleichachsiges Schraubgetriebe vorgesehen ist, das in den Aktions- oder Reaktionskraftfluß der von der Kraftübersetzungsvorrichtung abgebbaren Zuspannkraft eingeordnet ist, daß das erste, relativ zum ersten Kolben axialverschiebliche Schraubteil des Schraubgetriebes undrehbar axialverschieblich geführt ist und beim Bremsenanlegen unter der Einwirkung einer Bremsanlegekraft den Anlegehub ausführt, daß das zweite Schraubteil des Schraubgetriebes drehbar und um höchstens etwa den elastischen Zuspannhub axialverschieblich gelagert ist, daß zwischen dem zweiten Schraubteil und einer drehfest gehaltenen Abstützung, die bei aktionskraftdurchsetztem Schraubgetriebe am dritten Kolben, bei reaktionskraftdurchsetztem Schraubgetriebe am Gehäuse vorgesehen ist, eine kombinierte Dreh- und Axialkupplung eingeordnet ist, die in Schließrichtung durch eine Kupplungsfeder vorgespannt ist, und daß die Kupplungsfeder das zweite Schraubteil entgegen der Zuspannkraftrichtung in Andrückrichtung an die Abstützung belastet.

Durch diese Ausbildung dient das Schraubgetriebe zugleich der Schnellanlegefunktion wie der Lüftspielnachstellfunktion, sie weist also bei einfacher Ausgestaltung eine Doppelfunktion auf, wodurch der Bauaufwand des Zuspannzylinders niedrig gehalten werden kann.

Die nach der weiteren Erfindung vorteilhafte, weitere Ausgestaltung des Zuspannzylinders ist den Unteransprüchen entnehmbar.

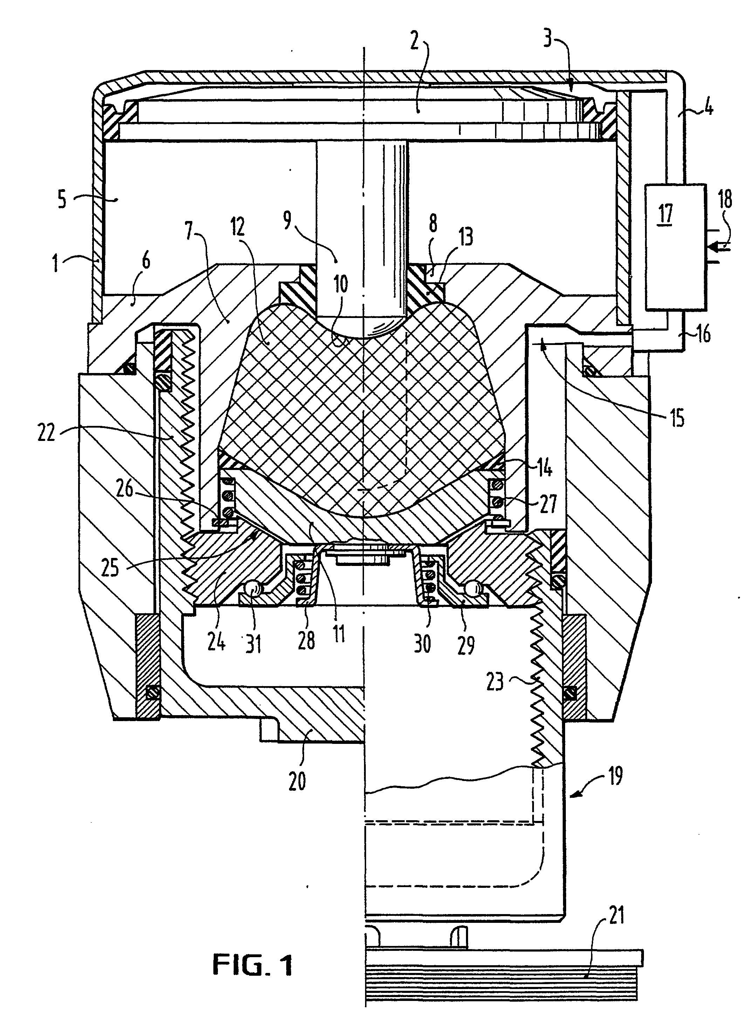

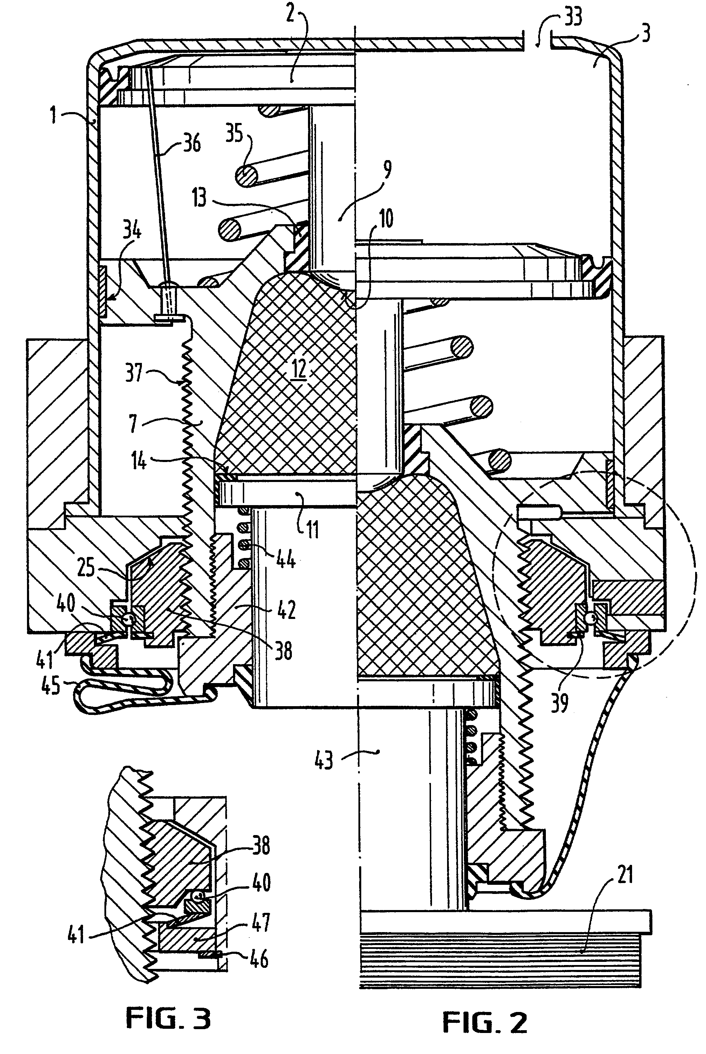

In den Zeichnungen Fig. 1 und 2 sind zwei unterschiedliche Ausführungsbeispiele für nach der Erfindung ausgebildete Zuspannzylinder im Schnitt dargestellt, wobei die beiden Schnittbildhälften jeweils unterschiedliche Funktionsstellungen zeigen. Die Fig. 3 zeigt eine abgewandelte Einzelheit aus Fig. 2.

Gemäß Fig. 1 ist in einem mehrteilig ausgebildeten Gehäuse 1 des Zuspannzylinders ein erster Kolben 2 großen Durchmessers gelagert, dessen Oberseite von einem Raum 3 durch eine Leitungsverbindung 4 zuzuführenden Bremsdruck beaufschlagbar ist. Der Raum 5 zur anderen Seite des ersten Kolbens 2 wird von einer gehäusefesten Zwischenwand 6 begrenzt, deren mittlerer Abschnitt zu einem topfartigen Reaktionsgehäuse 7 ausgebildet ist. Der erste Kolben 2 trägt einen den Raum 5 durchragenden und den dem ersten Kolben 2 zugewandten Bodenabschnitt 8 des Reaktionsgehäuses 7 abgedichtet verschieblich durchragenden Stößel 9, welcher innerhalb des Reaktionsgehäuses 7 abgerundet als ein zweiter Kolben 10 kleines Durchmessers endet. Nahe des dem ersten Kolben 2 abgewandten Endes des Reaktionsgehäuses 7 ist an dessen zylindrischer Innenwandung ein dritter Kolben 11 abgedichtet verschieblich gelagert; dieser dritte Kolben 11 weist einen zum zweiten Kolben 10 großen Durchmesser auf. Im vom Reaktionsgehäuse 7 und dem dritten Kolben 11 umschlossenen Raum befindet sich hohlraumfrei ein Übersetzungsmedium 12, welches verformbar und im wesentlichen unkompressibel ist. Das Übersetzungsmedium kann, wie bereits eingangs erwähnt, ein Elastomer sein, welches gummi- oder viskoelastische Eigenschaften aufweist, das Übersetzungsmedium 12 kann aber auch ein zähflüssiges, hochviskoses oder übliches, hydraulisches Medium sein. Zum dichten Einschluß des Übersetzungsmediums sind am Stößel 9 und am dritten Kolben 11 Dichtringe 13, 14 vorgesehen. Die Zwischenwand 6 grenzt vom Raum 5 einen das Reaktionsgehäuse 7 umgebenden Raum 15 ab, der eine Leitungsverbindung 16 mit Bremsdruckmittel beaufschlagbar ist. Die Leitungsverbindungen 4 und 16 führen zu einem Ventil 17, welches einen Anschluß 18 aufweist, durch den das Bremsdruckmittel von einer nicht dargestellten Steuereinrichtung zu- und abführbar ist.

In dem ersten Kolben 2 abgewandten Endabschnitt des Gehäuses 1 ist ein topfartiger, vom Druck im Raum 15 beaufschlagter, vierter Kolben 19 abgedichtet axialverschieblich geführt, der einen großen Durchmesser aufweist und dessen Bodenabschnitt 20 dem ersten Kolben 2 abgewandt ist und von welchem die vom Zuspannzylinder abgebbare Zuspannkraft auf eine nur in der rechten Bildhälfte beispielsweise dargestellte Bremsbacke 21 einer Scheibenbremse abgebbar ist. Der Zylinderabschnitt 22 des vierten Kolbens 19 weist ein Innengewinde 23 mit großer, für eine nichtselbsthemmende Verschraubung ausreichender Steigung auf; der Zylinderabschnitt 22 bildet somit ein erstes Verschraubungsteil. Mit dem Innengewinde 23 ist ein zweites, mutterartiges Verschraubungsteil 24 mit seinem Außengewinde nichtselbsthemmend verschraubt, der Zylinderabschnitt 22 bildet also als erstes Verschraubungsteil mit dem zweiten Verschraubungsteil 24 ein Schraubgetriebe. Das zweite Verschraubungsteil 24 kragt über den offenen Rand des Reaktionsgehäuses 7 radial nach innen und steht dort auf der dem Übersetzungsmedium 12 abgewandten Seite dem dritten Kolben 11 gegenüber; zwischen dem dritten Kolben 11 und dem zweiten Verschraubungsteil 24 ist mittels verzahnter Konusflächen eine axialverzahnte, kombinierte Dreh- und Axialkupplung 25 gebildet. Nahe des offenen Topfrandes des Reaktionsgehäuses 7 ist radialinnen ein als Federwiderlager 26 dienender Sicherungsring eingelassen, eine zwischen diesem und dem dritten Kolben 11 eingespannte Rückdruckfeder 27 belastet den dritten Kolben 11 in Andrückrichtung an das Übersetzungsmedium 12.

Seitens des zweiten Verschraubungsteiles 24 trägt der dritte Kolben 11 ein eine zentrale Öffnung des zweiten Verschraubungsteiles 24 durchragendes Federwiderlager 28, zwischen welchem und einem ringartigen Zwischenteil 29 ein letzteres in Richtung zum dritten Kolben 11 belastende Kupplungsfeder 30 eingespannt ist. Das Zwischenteil 29 liegt mittels eines Axialdrehlagers 31 auf der dem dritten Kolben 11 abgewandten Seite des zweiten Verschraubungsteiles 24 auf.

Der vierte Kolben 19 mit seinem das erste Verschraubungsteil bildenden Zylinderabschnitt 22 ist undrehbar axial verschieblich zu führen. Dies kann beispielsweise durch eine Drehbewegungen ausschließende Kupplung zur Bremsbacke 21 erfolgen, falls die Bremsbacke 21, wie bekannt, undrehbar geführt ist. Diese undrehbare Führung kann jedoch auch durch eine nicht dargestellte Axialverzahnung zwischen dem Außenmantel des Zylinderabschnittes 22 und dem Gehäuse 1, die auch als Nut-Feder-Führung ausgeführt sein kann, erfolgen. Ebenso ist der dritte Kolben 11 undrehbar axialverschieblich zu führen, wobei die Drehbewegungen ausschließende Führung, wie zum vierten Kolben 19 erwähnt, durch eine nichtdargestellte Axialverzahnungsführung zwischen dem dritten Kolben 11 und der inneren Topfwandung des Reaktionsgehäuses 7 erfolgen kann. Zum Ersatz der vorstehend beschriebenen, drehfesten Führung kann der Bodenabschnitt 20 oder der dritte Kolben 11 einen in Richtung zum jeweils anderen Teil ragenden Stiftansatz mit unrund profiliertem Querschnitt tragen, der teleskopisch verschieblich, aber undrehbar in die Ausnehmung einer entsprechend innenprofilierten Hülse eingreift, welche am anderen Teil undrehbar befestigt ist. Die vorstehend erwähnten, drehfesten Führungen bzw. drehfesten Koppelungen sind erforderlich, um ungewollte Verschraubungen des Schraubgetriebes auszuschließen.

Nach einer ersten Modifikation ist das Ventil 17 derart ausgebildet, daß es bei Bremsdruckzuführung zum Anschluß 18 zuerst einen bestimmten Mindestdruck in den Raum 15 einspeist, bevor es den Raum 3 druckbeaufschlagt.

In Fig. 1 ist in der linken Hälfte der Lösezustand bei unverschlissener Bremsbacke 21 und rechts eine Zwischenstellung beim Erreichen des Bremsenanlegens mit völlig verschlissener Bremsbacke 21 dargestellt; zwischen den beiden Figurenhälften wird somit die gesamte Nachstellkapazität der Lüftspielnachstellvorrichtung aufgebraucht. Im Lösezustand des Zuspannzylinders nehmen dessen Teile also die aus Fig. 1, linke Seite, ersichtlichen Lagen ein, wobei sich der erste Kolben 2, der zweite Kolben 10 und der dritte Kolben 11 in ihren obersten Lagen befinden und durch die Rückdruckfeder 27 gehalten werden. Die Kupplungsfeder 30 hält dabei die Dreh- und Axialkupplung 25 geschlossen, so daß keine unerwünschten Verschraubungen zwischen dem vierten Kolben und dem zweiten Verschraubungsteil 24 erfolgen können.

Bei Bremsdruckzuführung zum Anschluß 18 zu Bremsbeginn, also ausgehend von der linken Bildhälfte der Fig. 1, wird somit über das Ventil 17 und den Raum 15 voreilend der vierte Kolben 19 druckmittelbeaufschlagt und beginnt sich in Anlegerichtung der Bremsbacke 21 an die nichtdargestellte Bremsscheibe gemäß Fig. 1 nach unten zu verschieben. Dabei nimmt der vierte Kolben 19 über die Verschraubung das zweite Verschraubungsteil 24 bis zum Ausheben der Verzahnung der Dreh- und Axialkupplung 25 mit. Nach dem Lösen der Dreh- und Axialkupplung 25 ist das zuvor über den dritten Kolben 11 undrehbar gehaltene, zweite Verschraubungsteil 24 drehfrei und beginnt sich unter der Kraft der Kupplungsfeder 30 unter Drehen relativ zum vierten Kolben 19 zu verschrauben, während der vierte Kolben 19 den Anlegehub für die Scheibenbremse ausführt. Die Rückdruckfeder 27, unterstützt durch die von unten wirkende Bremsdruckbeaufschlagung des dritten Kolbens 11, hält während dieses Vorganges den ersten Kolben 2 in seiner aus Fig. 1, links, ersichtlichen Ausgangslage. Nach dem Bremsenanlegen gelangt der vierte Kolben 19 zur Ruhe und die Dreh- und Axialkupplung 25 rastet unter der Kraft der Kupplungsfeder 30 bis zur drehfesten Halterung des zweiten Verschraubungsteiles 24 wieder ein. Die jetzt erreichte Zwischenstellung ist in Fig. 1, rechts, dargestellt. Spätestens nunmehr erfolgt über das Ventil 17 auch eine Bremsdruckbeaufschlagung des ersten Kolbens 2 durch den Raum 3, wobei zu beachten ist, daß nach Stillstand des vierten Kolbens 19 der Druckanstieg des Bremsdruckes mit steilerem Gradienten erfolgen kann. Der erste Kolben 2 übt daher eine nach unten gerichtete Kraft aus, welche den zweiten Kolben 10 in das Übersetzungsmedium 12 einzudrücken sucht. Hierdurch erfolgt im Übersetzungsmedium 12 ein Druckaufbau, welcher den dritten Kolben 11 mit einer etwa dem Flächenverhältnis vom zweiten Kolben 10 zum dritten Kolben 11 übersetzten Kraft nach unten belastet. Der dritte Kolben 11 verschiebt sich daher entgegen der Kraft der Rückdruckfeder 27 relativ zum Reaktionsgehäuse 7, wobei er die Dreh- und Axialkupplung 25 fest zuspannt, hierdurch das zweite Verschraubungsteil 24 drehgesichert hält und bei seiner Axialbewegung mitnimmt. Über die Verchraubung nimmt das zweite Verschraubungsteil 24 den vierten Kolben 19 mit, welcher die Bremsbacke 21 unter geringer, elastischer Verformung mit hoher Kraft an die nichtdargestellte Bremsscheibe anpresst; die Scheibenbremse wird somit fest zugespannt. Der Stößel 9 bzw. zweite Kolben 10 kann dabei relativ tief in das Übesetzungsmedium 12 eindringen, wie es gestrichelt angedeutet ist.

Zum nachfolgenden Lösen der Bremse wird der Bremsdruck in den Räumen 3 und 15 durch den Anschluß 18 abgebaut, bis die Bremsbacke 21 nur noch kraftlos an der Bremsscheibe anliegt; dabei erfolgt ein durch Kraftabbau bedingter, elastischer Rückhub für den ersten Kolben 2. Anschließend drückt die Rückdruckfeder 27 den dritten Kolben 11 und über das Übersetzungsmedium 12 auch den zweiten Kolben 10 und damit den ersten Kolben 2 in ihre Ausgangslagen zurück. Unter der Kraft der Kupplungsfeder 30 folgt dabei das zweite Verschraubungsteil 24 bei geschlossen bleibender Dreh- und Axialkupplung 25 der Hubbewegung des dritten Kolbens 11, es nimmt dabei über die Verschraubung den vierten Kolben 19 und auch die Bremsbacke 21 mit. Bei dieser Hubbewegung bis zum Erreichen des vollen Lösezustandes, in welchem der erste Kolben 2, der zweite Kolben 10, der dritte Kolben 11 und das zweite Verschraubungsteil 24 ihre Ausgangslagen wieder einnehmen, erfährt der vierte Kolben 19 und damit die Bremsbacke 21 einen etwa der Zahnhöhe der Dreh- und Axialkupplung 25 entsprechenden Hub, es stellt sich also an der Scheibenbremse ein der Zahnhöhe entsprechendes Lüftspiel ein.

Es ist festzuhalten, daß zu Bremsbeginn das Bremsenlüftspiel, auch ein zu großes Bremsenlüftspiel, durch Verschieben des vierten Kolbens 19 überwunden wird, wobei zugleich ein zu großes Lüftspiel durch entsprechendes Verschrauben des zweiten Verschraubungsteiles 24 nachgestellt wird. Bei richtigem Bremsenlüftspiel führt der vierte Kolben 19 lediglich einen geringen Hub aus, welcher etwa der Zahnhöhe der Dreh- und Axialkupplung 25 entspricht, wobei das zweite Verschraubungsteil 24 gerade noch nicht drehfrei wird. Bei zu großem Bremsenlüftspiel stellt sich durch Verschrauben des zweiten Verschraubungsteiles 24 ebenfalls diese Funktionsstellung beim Erreichen des Bremsenanlegens ein. Nachfolgend führt der dritte Kolben 11 zu Beginn des Zuspannhubes eine der Zahnhöhe der Dreh- und Axialkupplung 25 entsprechende, diese fest zu spannende Abwärtsbewegung aus und nimmt sodann das zweite Kupplungsteil 24 unter festem Bremsenzuspannen mit. Es ergibt sich somit, daß das Übersetzungsmedium 12 hinsichtlich des dritten Kolbens 11 lediglich einen der Zahnhöhe der Dreh- und Axialkupplung 25 entsprechenden, geringen Schalthub als Verlusthub ausführen muß. Weiterhin ist erkennbar, daß durch Nachstellen eines übermäßigen Bremsenlüftspiels sofort zu Bremsenbeginn der erste Kolben 2 immer nur einen geringen Hub ausführt, wodurch die Baulänge des Zuspannzylinders gering gehalten werden kann.

In einer zweiten Modifikation ist das Ventil 17 derart geändert, daß es beim Lösen der Bremse den Raum 15 nacheilend zum Raum 3 entleert. Hierdurch wird erreicht, daß auch während des Lösens ein Nachstellvorgang erfolgen kann, auf die Nachstellfunktion zu Bremsbeginn mit dem Schalten der Dreh- und Axialkupplung 25 kann somit verzichtet werden. Bei dieser zweiten Modifikation erfolgt zu Bremsenbeginn eine gleichmäßige und gleichzeitige Bremsdruckbeaufschlagung der Räume 3 und 15, wobei durch entsprechende Bemessung des ersten Kolbens 2 und des vierten Kolbens 19 sowie schwache Ausbildung der Rückdruckfeder 27 erreichbar ist, daß sich der erste Kolben 2 unter Eindrücken des zweiten Kolbens 10 in das Übersetzungsmedium 12, der dritte Kolben 11 und der vierte Kolben 19 bis zum Bremsenanlegen ohne Öffnen der Dreh- und Axialkupplung 25 abwärts bewegen, wobei im Übersetzungsmedium 12 noch kein nennenswerter Druckaufbau erfolgt. Es ist hierbei sicherzustellen, daß bei jedem Bremsvorgang jeweils nur geringe, wenn auch zu große Anlegehübe zu überwinden sind. Anschließend erfolgt das Festbremsen wie vorstehend erläutert. Auch das Lösen bis zum kraftlosen Anliegen der Bremse erfolgt, wie vorstehend bereits geschildert. Nachfolgend wird durch die Kraft der Rückdruckfeder 27 der dritte Kolben 11, der zweite Kolben 10 und der erste Kolben 2 bei voreilendem Druckabbau im Raum 3 in ihre Lösestellungen bewegt, während der vierte Kolben 19 unter dem nacheilenden Druckabbau im Raum 15 noch kurz in der Bremsanlegestellung verbleibt. Während dieses Vorganges öffnet sich die Dreh- und Axialkupplung 25, und unter der Kraft der Kupplungsfeder 30 verschraubt sich das zweite Verschraubungsteil 24, dem dritten Kolben 11 nachfolgend, nach oben. Nach Stillstand des dritten Kolbens 11 und geringfügigem, zur Drehhalterung ausreichenden Eingreifen der Dreh- und Axialkupplung 25 wird das zweite Verschraubungsteil 24 wieder undrehbar gehalten, und die Verschraubung ist somit beendet. Beim nachfolgendem, völligen Druckabbau im Raum 15 vermag die Kupplungsfeder 30 den vierten Kolben 19 und das zweite Verschraubungsteil 24 bis zum vollständigen Schließen der Dreh- und Axialkupplung 25, also etwa um deren Zahnhöhe, anzuheben, wobei sich an der Scheibenbremse das der Zahnhöhe entsprechende Lüftspiel einstellt.

In einer weiteren, besonders vorteilhaften Modifikation ist es möglich, die beiden vorstehend erwähnten Modifikationen zu kombinieren, derart, daß der Einbremsvorgang nach der ersten Modifikation, der Lösevorgang nach der zweiten Modifikation erfolgt; hierdurch wird erreicht, daß zu Bremsbeginn ein etwa vorhandenes, übermäßiges Bremsenlüftspiel sofort nachgestellt wird, während zu Bremsende der während dieses Bremsvorganges aufgetretene Verschleiß nachgestellt wird.

In Fig. 2 sind zur Fig. 1 übereinstimmende Bauteile mit der Fig. 1 entsprechenden Bezugszeichen bezeichnet. Des weiteren ist auch in Fig. 2 in der linken Bildhälfte der Lösezustand des Zuspannzylinders bei unverschlissener Bremsbacke 21 und in der rechten Bildhälfte der Anlegezustand bei verschlissener Bremsbacke 21 dargestellt.

Nach Fig. 2 ist der vom Gehäuse 1 und dem ersten Kolben 2 umschlossene Raum 3 über einen Anschluß 33 unmittelbar vom Bremsdruckmittel beaufschlagbar. Der erste Kolben 2 trägt wiederum einen Stößel 9, der abgedichtet verschieblich in das Reaktionsgehäuse 7 ragt und mit dem zweiten Kolben 10 am Übersetzungsmedium 12 endet. Das Reaktionsgehäuse 7 ist im Gegensatz zu Ausführung nach Fig. 1 nicht fest, sondern mittels einer Gleitführung 34 gleichachsig zum ersten Kolben 2 verschieblich im Gehäuse 1 gelagert. Zwischen dem ersten Kolben 2 und das Reaktionsgehäuse 7 ist eine Feder 35 eingespannt, deren maximale Entspannung von einem nur Zugkräfte übertragenden Zuganker 36 begrenzt ist, der sich vom ersten Kolben 2 zum Reaktionsgehäuse 7 erstreckt und der beispielsweise durch ein Seil realisierbar ist. Das Reaktionsgehäuse 7 ist durch eine nicht dargestellte Vorrichtung, beispielsweise eine Axialverzahnung zum Gehäuse 1, undrehbar axialverschieblich geführt. An seinem Außenumfang trägt das das erste Schraubteil bildende Reaktionsgehäuse 7 ein Außengewinde 37, mit welchem eine das zweite Verschraubungsteil bildende Mutter 38 nichtselbsthemmend verschraubt ist. Seitens des ersten Kolbens 2 ist die Mutter 38 mittels der Dreh- und Axialkupplung 25 mit dem Gehäuse 1 kuppelbar, am Außenumfang der Mutter 38 ist mittels eines Sicherungsringes 39 der Innenring eines Axiallagers 40 gehalten, dessen Außenring um eine geringe Hubstrecke axialverschieblich am Gehäuse 1 gehalten ist. Eine am Gehäuse 1 gehaltene, als ringartiges Federblatt ausgebildete Kupplungsfeder 41 belastet den Außenring des Axiallagers 40 in Verschieberichtung der Mutter 38 zum ersten Kolben 2 und damit in Schließrichtung der Dreh- und Axialkupplung 25. In den offenen Randbereich des Reaktionsgehäuses 7 ist ein Führungsteil 42 eingesetzt, welches mit Abstand vor dem im Reaktionsgehäuse 7 abgedichtet verschieblich geführten, dritten Kolben 11 endet und einen mit diesem verbundenen, mit der nur in der rechten Bildhälfte gezeigten Bremsbacke 21 gekoppelten Stößel 43 führt. Zwischen das Führungsteil 42 und den dritten Kolben 11 ist eine letzteren gegen das Übersetzungsmedium 12 andrückende Feder 44 eingespannt. Ein Faltenbalg 45 erstreckt sich vom Gehäuse 1 zum Führungsteil 42 und deckt somit das Axiallager 40 verschmutzungsdicht ab.

Im Lösezustand, bei drucklosem Raum 3, nimmt der Zuspannzylinder die in Fig. 2, linke Hälfte, dargestellte Lage ein. Bei Bremsdruckzuführung durch den Anschluß 33 in den Raum 3 verschiebt sich der erste Kolben 2 gemäß Fig. 2 abwärts, wobei er über die Feder 35 das Reaktionsgehäuse 7 mit dem Übersetzungsmedium 12 und den dritten Kolben 11 sowie den Stößel 43 bis zum Anlegen der zuzuspannenden Reibungsbremse mitnimmt; der zweite Kolben 10 dringt dabei nicht in das noch praktisch drucklos bleibende Übersetzungsmedium 12 ein. Bei der Abwärtsbewegung wird durch geringfügige Mitnahme der Mutter 38 entgegen der Kraft der Feder 41 die zuvor geschlossene Dreh- und Axialkupplung 25 gelöst, woraufhin sich die Mutter 38 auf dem Außengewinde 37 des Reaktionsgehäuses 7 relativ nach oben verschraubt. Beim Anlegen der Reibungsbremse bleiben die Bremsbacke 21, der Stößel 43, der dritte Kolben 11 und über das Übersetzungsmedium 12 das Reaktionsgehäuse 7 stehen, woraufhin die Feder 41 die Dreh- und Axialkupplung 25 durch geringfügiges Weiterverschrauben der Mutter 38 bis zum undrehbaren Haltern der letzteren in schwache Anlage bringt. Diese Funktionsstellung ist in der rechten Hälfte der Fig. 2 dargestellt. Beim Weiterbewegen des ersten Kolbens 2 dringt der zweite Kolben 10 in das Übersetzungsmedium 12 ein und setzt dieses unter Spannung, durch welche auf den dritten Kolben 11 eine große, abwärts gerichtete Zuspannkraft für die Reibungsbremse ausgeübt wird. Diese große Zuspannkraft belastet auch das Reaktionsgehäuse 7 in entgegengesetzter Richtung, wodurch dieses sich unter Komprimieren der Feder 35 geringfügig aufwärts bewegt und dabei durch Mitnahme der Mutter 38 die Dreh- und Axialkupplung 25 kräftig schließt, woraufhin das Reaktionsgehäuse 7 in Anheberichtung über die Mutter 38 gegen das Gehäuse 1 unverschieblich abgestützt ist. Beim weiteren Abwärtsbewegen des ersten Kolbens 2 spannt der sich gegen die Kraft der Feder 44 verschiebende, dritte Kolben 11 die Reibungsbremse fest zu. Der zweite Kolben 10 kann dabei in die gestrichelt in die rechte Hälfte der Fig. 2 eingezeichnete Lage gelangen.

Wird zum Lösen der Bremse der im Raum 3 herrschende Bremsdruck abgebaut, so entspannt sich die Reibungsbremse, wobei unter Abbau der elastischen Verspannungen die Bremsbacke 21, der Stößel 43, der dritte Kolben 11 und über das Übersetzungsmedium 12 der zweite Kolben 10 mit dem ersten Kolben 2 abgehoben werden; die Mutter 38 hält dabei bei geschlossener Dreh- und Axialkupplung 25 das Reaktionsgehäuse 7 fest. Während dieses Rückhubes spannt sich der Zuganker 36, wobei das Reaktionsgehäuse 7 geringfügig bis zum lediglichen Anliegen der Dreh- und Axialkupplung 25 unter der Kraft der Feder 35 abwärts bewegt, also in die zuvor beim Bremsenanlegen eingenommene Lage eingestellt wird. Abschließend drückt die Feder 44 den dritten Kolben 11 und damit über den zweiten Kolben 10, also unter restlicher Entspannung des Übersetzungsmediums 12, den ersten Kolben 2 in die in Fig. 2 links dargestellte Lösestellung zurück, wobei über den Zuganker 36 die Dreh- und Axialkupplung 25 vollständig einrastet und sich durch die Kupplungsfeder 41 in Eingriff gehalten wird und dadurch das korrekte Lösespiel zwischen der Bremsbacke 21 und der Bremsscheibe einstellt.

Es ist zweckmäßig, über den Umfang des ersten Kolbens 2 gleichmäßig verteilt mehrere Zuganker 36 anzuordnen. Weiterhin ist es möglich, zwischen beispielsweise dem der gegebenenfalls auch unverzahnt auszubildenden Dreh- und Axialkupplung 25 zugehörenden Abschnitt des Gehäuses 1 und dem oberen, radialauskragenden Flansch des Reaktionsgehäuses 7 eine nicht dargestellte Rückdruckfeder anzuordnen; diese Rückdruckfeder kann allerdings auch anderweitig, beispielsweise an der Bremsbacke 21 angreifend angeordnet sein. Weiterhin kann das in Fig. 2 als Rillenkugellager dargestellte Axiallager 40 gemäß Fig. 3, welche eine geänderte Ausführung des in Fig. 2 strichpunktiert eingekreisten Bildausschnittes zeigt, als einfaches, reines Axiallager ausgebildet sein, welches sich über die Feder 41 gegen einen am Gehäuse 1 durch einen Sicherungsring 46 gehaltenen Abstützring 47 abstützt.

**Patentansprüche**

1. Zuspannzylinder zum Abgeben einer Zuspannkraft für Reibungsbremsen, insbesondere Scheibenbremsen von Fahrzeugen, mit einem von einem fluidischen Bremsdruckmittel beaufschlagbaren, ersten Kolben (2) großen Durchmessers, mit einer Kraftübersetzungsreinrichtung, umfassend einen mit dem ersten Kolben (2) verbundenen, zweiten Kolben (10) mit bezogen auf ersteren kleinem Durchmesser, der auf ein verformbares, im wesentlichen unkompressibles Übersetzungsmedium (12) eine Druckkraft auszuüben vermag, wobei das Übersetzungsmedium (12) zumindest nahezu hohlraumfrei von einem Reaktionsgehäuse (7) und einem in diesem gleichachsig zum ersten Kolben (2) verschieblich geführten, die Zuspannkraft abgebenden, dritten Kolben (11) mit bezogen auf den zweiten Kolben (10) großem Durchmesser umschlossen ist, mit einer gleichachsig zu den Kolben angeordneten Lüftspielnachstellvorrichtung und mit einer Schnellanlegevorrichtung, welche zu Bremsbeginn einen Druckaufbau im Übersetzungsmedium (12) bis zum Bremsenanlegen verhindert, dadurch gekennzeichnet, daß zur baulichen Kombination der Lüftspielnachstellvorrichtung mit der Schnellanlegevorrichtung ein nichtselbsthemmendes, zu den Kolben (2, 10, 11) gleichachsiges Schraubgetriebe vorgesehen ist, das in den Aktions- oder Reaktionskraftfluß der von der Kraftübertragungsvorrichtung (10, 11, 12) abgebbaren Zuspannkraft eingeordnet ist, daß das erste, relativ zum ersten Kolben (2) axialverschiebliche Schraubteil (Innengewinde 23 bzw. Außengewinde 37) des Schraubgetriebes nicht drehbar, axial verschieblich geführt ist und beim Bremsenanlegen unter der Einwirkung einer Bremsanlegekraft den Anlegehub ausführt, daß das zweite Schraubteil (24, Mutter 38) des Schraubgetriebes drehbar und um höchstens etwa den elastischen Zuspannhub axialverschieblich gelagert ist, daß zwischen dem zweiten Schraubteil (24, Mutter 38) und einer drehfest gehaltenen Abstützung, die bei aktionskraftdurchsetztem Schraubgetriebe am dritten Kolben (11), bei reaktionskraftdurchsetztem Schraubgetriebe am Gehäuse (1) vorgesehen ist, eine kombinierte Dreh- und Axialkupplung (25) eingeordnet ist, die in Schließrichtung durch eine Kupplungsfeder (30, 41) das zweite Schraubteil (24, 38) entgegen der Zuspannkraftrichtung in Andrückrichtung an die Abstützung (Kolben 11, Gehäuse 1) belastet.

2. Zuspannzylinder nach Anspruch 1, dadurch gekennzeichnet, daß bei aktionskraftdurchsetztem Schraubgetriebe das erste Schraubteil (Innengewinde 23) mit einem vierten Kolben (19) verbunden ist, der gleichgerichtet zum ersten Kolben (2) vom Bremsdruckmittel beaufschlagbar und dabei voreilend zum ersten Kolben (2) bewegbar ist, und daß die Kupplungsfeder (30) der axialverzahnt ausgebildeten Dreh- und Axialkupplung (25) gegen den dritten Kolben (11) abgestützt ist.

3. Zuspannzylinder nach Anspruch 2, dadurch gekennzeichnet, daß der vierte Kolben (19) topfartig ausgebildet ist und ein Innengewinde (23) trägt, mit welchem das ein Außengewinde aufweisende, mutterartige, zweite Verschraubungsteil (24) verschraubt ist, daß der dritte Kolben (11) ein eine zentrale Öffnung des zweiten Verschraubungsteiles (24) in Zuspannkraftrichtung durchragendes Federwiderlager (28) trägt, auf welchem sich das in Zuspannkraftrichtung liegende Ende der Kupplungsfeder (30) abstützt, und daß in die Teilekette dritter Kolben (11), Federwiderlager (28), Kupplungsfeder (30) und zweites Verschraubungsteil (24) ein Axialdrehlager (31) eingeordnet ist.

4. Zuspannzylinder nach Anspruch 2, gekennzeichnet durch eine den dritten Kolben (11) entgegen der Zuspannkraftrichtung belastende Rückdruckfeder (27).

5. Zuspannzylinder nach Anspruch 3 und 4, dadurch gekennzeichnet, daß das gehäusefest gehaltene Reaktionsgehäuse (7) topfartig ausgebildet ist, der Bodenabschnitt (8) der topfartigen Vertiefung dem ersten Kolben (2) zugewandt ist und vom stößelartigen (9), zweiten Kolben (10) abgedichtet axialverschieblich durchdrungen ist, und daß die Rückdruckfeder (27) im Reaktionsgehäuse (7) angeordnet und zwischen ein nahe dessen offenem Innenrand befindliches, reaktionsgehäusefestes Federwiderlager (26) und den dritten Kolben (11) eingespannt ist.

6. Zuspannzylinder nach einem oder mehreren der Ansprüche 2 bis 5, gekennzeichnet durch ein in die Bremsdruckmittelzuführung (4) zu dem Beaufschlagungsraum (3) wenigstens des ersten Kolbens (2) eingeordnetes, ein Voreilen der Bremsdruckmittelbeaufschlagung des vierten Kolbens (19) bewirkendes Ventil (17).

7. Zuspannzylinder nach einem oder mehreren der Ansprüche 2 bis 5, gekennzeichnet durch ein in die Bremsdruckmittelzuführung (16) zu dem Beaufschlagungsraum (15) wenigstens des vierten Kolbens (19) eingeordnetes, ein Nacheilen der Bremsdruckmittelentlastung des vierten Kolbens (19) nach dem ersten Kolben (2) bewirkendes Ventil (17).

8. Zuspannzylinder nach Anspruch 1, dadurch gekennzeichnet, daß bei reaktionskraftdurchsetztem Schraubgetriebe das erste Schraubteil (Außengewinde 37) mit dem gleichachsig zum ersten Kolben (2) axialverschieblich geführten Reaktionsgehäuse (7) verbunden ist, daß zwischen dem ersten Kolben (2) und dem Reaktionsgehäuse (7) eine diese Teile voneinander abspreizende Feder (35) eingespannt und ein den maximalen, axialen Abstand dieser Teile begrenzender Zuganker (36) angeordnet ist, daß die Dreh- und Axialkupplung (25) axialverzahnt ausgebildet ist, und daß zwischen das Reaktionsgehäuse (7) und den dritten Kolben (11) eine letzteren entgegen der Zuspannkraftrichtung belastende Feder (44) eingespannt ist.

9. Zuspannzylinder nach Anspruch 8, dadurch gekennzeichnet, daß das Reaktionsgehäuse (7) topfartig ausgebildet ist, das Bodenteil der topfartigen Vertiefung dem ersten Kolben (2) zugewandt ist und vom stößelartigen (9), zweiten Kolben (10) abgedichtet axialverschieblich durchdrungen ist, daß das Reaktionsgehäuse (7) an seinem Außenumfang ein Gewinde (37) trägt, mit welchem das zweite, als Mutter (38) ausgebildete Verschraubungsteil verschraubt ist, und daß die Mutter (38) mittels einer begrenzt axialverschieblichen, von der Kupplungsfeder (41) belasteten Axiallagerung (40) gelagert ist.

**Claims**

1. An application cylinder for providing an applying force for friction brakes, in particular disc brakes of vehicles, with a first piston (2) of large diameter which can be charged by a fluid brake pressure medium, with a force transmitting arrangement, consisting of a second piston (10) which is connected to the first piston and has a smaller diameter than the first piston (2) and is capable of exerting a pressure force on a deformable, substantially incompressible transmission medium (12), the transmission medium (12) being surrounded at least almost without spaces by a reaction casing (7) and a third piston (11) which is movably guided in the reaction casing along the same axis as the first piston (2), delivers the applying force, and has a greater diameter than the second piston (10), with a clearance adjusting device arranged along the same axis as the piston and with a rapid application device, which prevents pressure from building up in the transmission medium (12) at the beginning of braking until the brake is applied, characterised in that, for the structural combination of the clearance adjusting device and the rapid application device, there is provided a non-self-locking screw mechanism which has the same axis as the pistons (2, 10, 11) and is inserted in the acting or reacting force flow of the applying force deliverable by the force transmitting arrangement (10, 11, 12), in that the first screw part (internal thread 23 or external thread 37) of the screw mechanism which is axially movable relative to the first piston (2) is guided in a non-rotatable, axially movable manner and performs the application stroke under the influence of a brake-applying force when the brakes are applied, in that the second screw part (24, nut 38) of the screw mechanism is mounted rotatably and axially movably by at most roughly the resilient application stroke, in that a combined rotary and axial coupling (25) which is pre-stressed in the closing direction by a coupling spring (30, 41) is inserted between the second screw part (24, nut 38) and a rotationally fixed support which is provided on the third piston (11) when the screw mechanism is traversed by acting force and on the casing (1) when the screw mechanism is traversed by reacting force, and in that the coupling spring (30, 41) loads the second screw part (24, 30) against the applying force direction in the direction of pressure on to the support (piston 11, casing 1).

2. An application cylinder according to Claim 1, characterised in that, when the screw mechanism is traversed by an acting force, the first screw part (internal thread 23) is connected to a fourth piston (19) which can be charged with brake pressure medium in the same direction as the first piston (2) and is movable in advance of the first piston (2), and in that the coupling spring (3) of the axially toothed rotary and axial coupling (25) is supported against the third piston (11).

3. An application cylinder according to Claim 2, charcterised in that the fourth piston (19) is pot-shaped in design and bears an internal thread (23) with which the nut-like second threaded part (24) having an external thread is screwed, in that the third piston (11) bears a spring abutment (28) which penetrates in the applying force direction through a central opening in the second threaded part (24) and on which the end of the coupling spring (30) lying in the applying force direction rests, and in that a pivot thrust bearing (31) is inserted in the series of parts comprising the third piston (11), spring abutment (28), coupling spring (30) and second threaded part (24).

4. An application cylinder according to Claim 2, characterised by a restoring spring (27) which loads the third piston (11) against the applying force direction.

5. An application cylinder according to Claims 3 and 4, characterised in that the reaction casing (7) which is rigidly fixed on the casing is pot-shaped in design, the base of the pot-shaped recess faces the first piston (2) and is penetrated axially movably in sealed manner by the ram-like (9) second piston (10) and in that the restoring spring (27) is arranged in the reaction casing (7) and is secured between a spring abutment (26) which is rigid with the reaction casing and is located near to the open inner edge thereof and the third piston (11).

6. An application cylinder according to one or more of Claims 2 to 5, characterised by a valve (17) which is inserted into the brake pressure medium supply (4) to the charging chamber (3) of at least the first piston (2) and causes the fourth piston (19) to be charged in advance with brake pressure medium.

7. An application cylinder according to one or more of Claims 2 to 5, characterised by a valve (17) which is inserted into the brake pressure medium supply (16) to the charging chamber (15) of at least the fourth piston (19) and causes the release of brake pressure medium from the fourth piston (19) to lag behind the first piston (2).

8. An application cylinder according to Claim 1, characterised in that, when the screw mechanism is traversed by reacting force, the first screw part (external thread 37) is connected to the reaction casing (7) guided axially movably along the same axis as the first piston (2), in that, between the first piston (2) and the reaction casing (7) there is secured a spring (35) which spreads these members apart and there is arranged a tensile member (36) restricting the maximum axial spacing between these parts, in that the rotary and axial coupling (25) is provided with axial teeth and in that a spring (44) which loads the third piston (11) against the applying force direction is secured between the reaction casing (7) and the third piston (11).

9. An application cylinder according to Claim 8, characterised in that the reaction casing (7) is pot-shaped in design, the base of the pot-shaped recess faces the first piston (2) and is penetrated in a sealing and axially movable manner by the ram-like (9) second piston (10), in that the reaction casing (7) bears on its outer periphery a thread (37) with which the second threaded part designed as a nut (38) is screwed and in that the nut (38) is mounted by means of an axial bearing (40) which is axially movable to a limited extent and is loaded by the coupling spring (41).

**Revendications**

1. Cylindre de serrage destiné à délivrer une force de serrage à des freins à friction, notamment des freins à disques de véhicules automobiles, comportant un premier piston (2) de grand diamètre, soumis à l'action d'un fluide de frein sous pression, comportant un dispositif de transmission de force, comprenant un deuxième piston (10) relié au premier piston (2), de diamètre plus petit que le premier, et qui peut exercer une force de compression sur un milieu de transmission (12) déformable, pratiquement incompressible, le milieu de transmission (12) étant enfermé au moins à peu près sans jeu par une enveloppe de réaction (7) et par un troisième piston (11) de grand diamètre par rapport au deuxième piston (10), lequel piston (11) est guidé coulissant dans l'enveloppe (7), sur le même axe que le premier piston (2), et délivre la force de serrage, comportant un dispositif de rattrapage de jeu disposé sur le même axe que les pistons, et comportant un dispositif d'application rapide qui, en début de freinage, empêche l'établissement d'une pression dans le milieu de transmission (12) jusqu'à l'application des freins, caractérisé en ce que pour la combinaison de construction du dispositif de rattrapage de jeu et du dispositif d'application rapide, il est prévu un mécanisme à vis non autobloquant, de même axe que les pistons (2, 10, 11), lequel mécanisme est disposé dans le flux de force d'action ou de réaction de la force de serrage délivrée par le dispositif de transmission de force (10, 11, 12), en ce que le premier élément de vis (taraudage 23 ou filetage 37) du mécanisme à vis, se déplaçant axialement par rapport au premier piston (2), est guidé non rotatif, coulissant axialement et effectue la course d'application pendant l'application des freins, sous l'effet d'une force d'application des freins, en ce que le deuxième élément de vis (24, écrou 38) du mécanisme à vis est monté tournant et coulissant axialement sur au maximum environ la course de serrage élastique, en ce qu'un accouplement combiné tournant et axial (25) est disposé entre le deuxième élément de vis (24), écrou 38) et un appui maintenu fixe en rotation qui est prévu sur le troisième piston (11) lorsque le mécanisme à vis est sollicité par la force d'action, et sur le carter (1) lorsque le mécanisme à vis est sollicité par la force de réaction, en ce que l'accouplement tournant et axial (25) est précontraint dans le sens de la fermeture par un ressort d'accouplement (30, 41) et en ce que le ressort d'accouplement (30, 41) agit sur le deuxième élément de vis (24, 38) à l'encontre du sens de la force de serrage, dans le sens de pressage contre l'appui (piston 11, carter 1).

2. Cylindre de serrage selon la revendication 1, caractérisé en ce que dans le cas où le mécanisme à vis est sollicité par la force d'action, le premier élément de vis (taraudage 23) est relié à un quatrième piston (19) qui est soumis à l'action du fluide de freinage sous pression, dans le même sens que le premier piston (2), et se déplace en avance par rapport au premier piston (2) et en ce que le ressort d'accouplement (30) de l'accouplement tournant et axial (25) présentant une denture axiale, prend appui contre le troisième piston (11).

3. Cylindre de serrage selon la revendication 2, caractérisé en ce que le quatrième piston (19) est en forme de pot et porte un taraudage (23) auquel est vissé un deuxième élément de vissage (24) en forme d'écrou, présentant un filetage, en ce que le troisième piston (11) porte une butée à ressort (28) traversant un orifice central du deuxième élément de vissage (24) dans dans le sens de la force de serrage, butée sur laquelle prend appui l'extrémité du ressort d'accouplement (30) située dans le sens de la force de serrage, et en ce que dans la chaîne des éléments troisième piston (11), butée à ressort (28), ressort d'accouplement (30) et deuxième élément de vissage (24), est placé un palier de rotation axiale (31).

4. Cylindre de serrage selon la revendication 2, caractérisé par un ressort de rappel de compression (27) qui agit sur le troisième piston (11) à l'encontre du sens de la force de serrage.

5. Cylindre de serrage selon la revendication 3 et 4, caractérisé en ce que l'enveloppe de réaction (7) soldiaire du carter est en forme de pot, en ce que la section du fond du creux en forme de pot est tournée vers le premier piston (2) et est traversée par le deuxième piston (10) en forme de poussoir (9) qui coulisse axialement et de façon étanche, et en ce que le ressort de rappel de compression (27) est disposé dans l'enveloppe de réaction (7) et est serré entre une butée à ressort (26) solidaire de l'enveloppe de réaction, située à proximité de son bord intérieur ouvert, et le troisième piston (11).

6. Cylindre de serrage selon l'une ou plusieurs des revendications 2 à 5, caractérisé par une soupape (17) disposée dans le conduit d'amenée (4) du fluide de freinage sous pression au volume d'alimentation (3) du premier piston (2) au moins, et qui provoque une avance de l'alimentation en fluide de freinage sous pression du quatrième piston (19).

7. Cylindre de serrage selon une ou plusieurs des revendications 2 à 5, caractérisé par une soupape (17) disposée le conduit d'amenée (16) du fluide de freinage sous pression au volume d'alimentation (15) du quatrième piston (19) au moins et qui provoque un retard de la fin de l'action du fluide de freinage sous pression sur le quatrième piston (19) par rapport au premier piston (2).

8. Cylindre de serrage selon la revendication 1, caractérisé en ce que dans le cas où le mécanisme à vis est sollicité par la force de réaction, le premier élément de vis (filetage 37) est relié à l'enveloppe de réaction (7) guidée coulissant axialement sur le même axe que le premier piston (2), en ce qu'un ressort (35) est serré entre le premier piston (2) et l'enveloppe de réaction (7) et écarte ces éléments l'un de l'autre, et en ce qu'il est prévu un tirant (36) limitant la course axiale maximale de ces éléments, en ce que l'accouplement tournant et axial (25) présente une denture axiale et en ce qu'un ressort (44) est serré entre l'enveloppe de réaction (7) et le troisième piston (11) et agit sur ce dernier à l'encontre du sens de la force de serrage.

9. Cylindre de serrage selon la revendication 8, caractérisé en ce que l'enveloppe de réaction (7) a la forme d'un pot, en ce que la section de fond du creux en forme de pot est tournée vers le premier piston (2) et est traversée par le deuxième piston (10) en forme de poussoir (9) qui coulisse axialment de façon étanche, en ce que l'enveloppe de réaction (7) porte sur son pourtour extérieur un filetage (37) auquel est vissé le deuxième élément de vissage en forme d'écrou (38) et en ce que l'écrou (38) est monté au moyen d'un palier axial (40) coulissant axialement de façon limitée et sur lequel agit le ressort d'accouplement (41).

**FIG. 1**

EP 0 208 098 B1

FIG. 3

FIG. 2